# FASCICULE DE BREVET EUROPEEN

(11) **EP 0 526 273 B1**
(45) Date de publication et mention de la délivrance du brevet: **02.11.1995**
(21) Numéro de dépôt: 92401781.7
(22) Date de dépôt: 25.06.1992
(51) Int. Cl.: B60T 13/74

(54) **Frein à disque verrouillable**
Verriegelbare Scheibenbremse
Lockable disc brake

(30) Priorité: 01.08.1991 IT TO910616
(43) Date de publication de la demande: 03.02.1993
(73) Titulaire: AlliedSignal Freni S.p.A., 70026 Modugno (IT)
(72) Inventeur: Angelantonio, Errico Contrada Lama Zevinna, I-70054 Ciovinazzo (BA) (IT)
(74) Mandataire: Bentz, Jean-Paul

(56) Documents cités:
- US-A- 4 175 646
- US-A- 4 804 073

## Description

La présente invention concerne les freins à disque à actionnement fluidique pour véhicules automobiles. On a cherché à pourvoir les freins à disque d'un dispositif permettant de maintenir une force de frottement importante entre les patins de frein et le disque, hors d'un actionnement fluidique du frein, pour faire office de frein de parc. On a ainsi développé des dispositifs à cames et câbles à actionnement manuel qui présentent notamment l'inconvénient majeur de nécessiter une force d'actionnement importante, même à travers un levier.

Pour pallier cet inconvénient, on a développé des freins à disque pouvant être actionnés soit fluidiquement, soit électriquement. US-A-4,793,447 décrit par exemple un tel frein. Toutefois un tel frein requiert un jeu d'engrenages planétaires important et un moteur électrique de puissance élevée, entraînant un coût sensiblement prohibitif. En outre, le fait que le moteur électrique doit être de puissance élevée pour actionner le frein est un inconvénient notamment si, lors du défreinage électrique, la source d'énergie embarquée dans le véhicule est défaillante ou faible.

La présente invention a donc pour but d'obvier à ces inconvénients en évitant l'utilisation d'un moteur électrique de puissance élevée et le jeu d'engrenages requis.

La présente invention concerne donc un frein à disque comportant un étrier solidaire d'un premier patin de frein, dans lequel est pratiqué un alésage dans lequel est susceptible de coulisser de façon étanche un piston solidaire d'un second patin de [rein, une chambre de pression étant déterminée par l'alésage entre l'étrier et le piston et étant susceptible de recevoir un fluide sous pression pour déterminer l'application des patins de frein sur le disque.

Selon l'invention, le frein comporte un moyen permettant de verrouiller et de déverrouiller en position le piston par rapport à l'étrier lors de l'application des patins sur le disque, ce moyen étant constitué par un moteur électrique entraînant en rotation un arbre fileté fixe en translation axiale par rapport à l'étrier, et coopérant avec un écrou fixe en rotation par rapport au piston et mobile en translation axiale par rapport au piston.

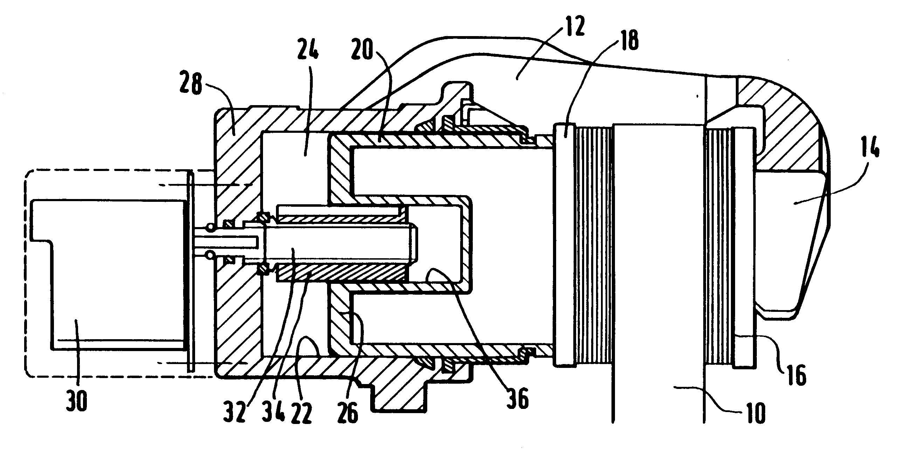

L'invention sera mieux comprise et d'autres buts, avantages et caractéristiques de celle-ci apparaîtront plus clairement à la lecture de la description qui suit d'un mode préféré de réalisation donné à titre explicatif en référence au dessin annexé sur lequel :
La Figure unique représente schématiquement en coupe axiale un frein à disque conforme à la présente invention.

En référence maintenant à cette Figure, l'homme du métier reconnaîtra en 10 un disque à freiner. Le frein comprend, de manière conventionnelle, un étrier 12 dont une extrémité 14 est solidaire d'un patin 16 destiné à être appliqué sur une face du disque 10. Un second patin 18 est destiné à être appliqué sur l'autre face du disque 10. Ce second patin 18 est solidaire d'un piston 20 coulissant de façon étanche dans un alésage 22 pratiqué dans l'étrier 12 et déterminant une chambre de pression 24 entre une face 26 du piston 20 opposée au patin 18 et une paroi arrière 28 de l'étrier 12.

Cette chambre de pression 24 reçoit le fluide sous pression d'actionnement du frein.

Un moteur électrique 30 comportant éventuellement un dispositif de réduction, est disposé de façon à entraîner en rotation un arbre 32 faisant saillie à l'intérieur de la chambre de pression 24, tout en restant immobile en translation par rapport à la paroi 28 de l'étrier. Bien évidemment, des joints d'étanchéité appropriés sont disposés entre cette paroi 28 et l'arbre 32 pour éviter toute fuite du fluide d'actionnement.

L'arbre 32 est fileté de façon à coopérer avec un écrou taraudé en forme de manchon 34 pour transformer le mouvement de rotation de l'arbre 32 en un mouvement de translation du manchon 34, ce manchon 34 étant pourvu d'un dispositif anti-rotation.

Un alésage borgne 36 est pratiqué dans la paroi 26 du piston 20 opposée à celle qui est solidaire du patin 18 de frein. Le manchon 34 coulisse librement dans cet alésage borgne 36 qui lui interdit toute rotation par un moyen quelconque telle une rainure, une goupille ou une forme spécifique, par exemple hexagonale, etc.

Le fonctionnement est le suivant.

Pour bloquer en position de freinage le frein, le conducteur appuie d'abord normalement sur la pédale de frein, ce qui a pour effet d'amener un fluide sous pression dans la chambre 24 dont le volume alors augmente par déplacement relatif de l'étrier 12 et du piston 20. Tout en maintenant le pied sur la pédale de frein, le conducteur manoeuvre un interrupteur électrique permettant de mettre sous tension le moteur 30. L'arbre 32 tourne alors ce qui entraîne la translation du manchon 34 qui atteint le fond de l'alésage borgne 36. Le conducteur peut alors relâcher la pédale de frein, les deux patins 16 et 18 restent alors appliqués fermement sur le disque, car il y a alors verrouillage du piston par rapport à l'étrier du fait de la réaction.

Pour défreiner, le conducteur appuiera à nouveau d'abord sur la pédale de frein pour éliminer l'effort en recul exercé par le manchon 34 sur les filets de l'arbre 32, puis, en manoeuvrant l'interrupteur électrique l'arbre 32 tournera en sens inverse, ramenant ainsi le manchon 34 en butée sur le fond 28 de l'étrier.

On comprendra qu'un tel dispositif peut servir tant de frein de parc que de dispositif antivol. Dans ce dernier cas, l'interrupteur précité pourra être réalisé à partir d'une clef électronique.

Dans tous les cas, le moteur électrique sera un moteur de faible puissance de l'ordre de 5 à 10 Watts, puisque sa seule fonction est d'obtenir le coulissement du manchon 34, et non d'exercer l'effet requis pour le déplacement relatif du piston et de l'étrier, et l'application en pression des patins 16,18 sur le disque 10.

## Revendications

1. Frein à disque comportant un étrier (12) solidaire d'un premier patin de frein (16), dans lequel est pratiqué un alésage (22) dans lequel est susceptible de coulisser de façon étanche un piston (20) solidaire d'un second patin de frein (18), une chambre de pression (24) étant déterminée par ledit alésage (22) entre ledit étrier (28) et ledit piston (22) et étant susceptible de recevoir un fluide sous pression pour déterminer l'application desdits patins de frein (16,18) sur ledit disque (10), caractérisé en ce qu'il comporte un moyen (30,32,34) permettant de verrouiller et de déverrouiller en position ledit piston (20) par rapport audit étrier (12) lors de l'application desdits patins sur ledit disque, ledit moyen étant constitué par un moteur électrique (30) entraînant en rotation un arbre fileté (32) fixe en translation axiale par rapport audit étrier (12), et coopérant avec un écrou fixe en rotation par rapport audit piston (20) et mobile en translation axiale par rapport audit piston.

2. Frein à disque selon la revendication 1, caractérisé en ce que ledit écrou est constitué par un manchon (34) taraudé intérieurement dont la paroi extérieure coopère en anti-rotation avec un alésage borgne (36) pratiqué dans une paroi (26) dudit piston (20) opposée à celle qui est solidaire dudit second patin de frein (18).

## Claims

1. Disk-brake comprising a caliper (12) securely attached to a first brake pad (16), in which is made a bore (22) in which is capable of sliding in leaktight manner a piston (20) securely attached to a second brake pad (18), a pressure chamber (24) being determined by said bore (22) between said caliper (28) and said piston (22) and being capable of receiving a fluid under pressure so as to determine the application of said brake pads (16, 18) on said disk (10) characterised in that said disk-brake comprises a means (30, 32, 34) for locking and for unlocking in position said piston (20) with respect to said caliper (12) at the time of the application of said pads on said disk, said means being constituted by an electric motor (30) driving in rotation a threaded shaft (32) fixed in axial translation with respect to said caliper (12), and co-operating with a nut fixed in rotation with respect to said piston (20) and movable in axial translation with respect to said piston.

2. Disk-brake according to Claim 1 characterised in that said nut is constituted by an internally tapped sleeve (34) whose outer wall cooperates in anti-rotation with a blind bore (36) made in a wall (26) of said piston (20) opposite to that which is securely attached to said second brake pad (18).

## Patentansprüche

1. Scheibenbremse mit einem fest mit einem ersten Bremsbelag (16) verbundenen Bremssattel (12), in welchem eine Bohrung (22) ausgebildet ist, in der in dichter Weise ein Kolben (20) gleiten kann, der fest mit einem zweiten Bremsbelag (18) verbunden ist, wobei von der Bohrung (22) zwischen dem Bremssattel (28) und dem Kolben (22) eine Druckkammer (24) abgegrenzt ist, die ein unter Druck stehendes Fluid aufnehmen kann, um das Anlegen der Bremsbeläge (16, 18) an die Scheibe (10) zu veranlassen, dadurch gekennzeichnet, daß sie ein Mittel (30, 32, 34) umfaßt, welches ein Verriegeln des Kolbens (20) in seiner Stellung bezüglich des Bremssattels (12) bei dem Anlegen der Beläge an die Scheibe und ein Entriegeln ermöglicht, wobei das Mittel durch einen elektrischen Motor (30) gebildet ist, der eine mit einem Gewinde versehene Welle (32) in Drehung versetzt, die axial bezüglich des Bremssattels (12) translationsfest ist und mit einer bezüglich des Kolbens (20) rotationsfesten und axial translationsbewegbaren Mutter zusammenwirkt.

2. Scheibenbremse nach Anspruch 1, dadurch gekennzeichnet, daß die Mutter durch eine mit einem Innengewinde versehene Hülse (34) gebildet ist, deren Außenwand drehfest mit einer Blindbohrung (36) zusammenwirkt, die in einer Wand (26) des Kolbens (20) ausgebildet ist, die zu der fest mit dem zweiten Bremsbelag (18) verbundenen Wand entgegengesetzt ist.
